# EUROPEAN PATENT SPECIFICATION

(11) **EP 0 846 905 B1**
(45) Date of publication and mention of the grant of the patent: **02.01.2004**
(21) Application number: 97118396.7
(22) Date of filing: 23.10.1997
(51) Int. Cl.: F16L 3/227, F16L 3/00

(54) **A method for fastening a part or component to a body of an automobile and an adapter portion for performing the method**
Verfahren zum Befestigen eines Teils oder einer Komponente an einer Automobilkarosserie und ein Adapterteil für die Durchführung dieses Verfahrens
Méthode de fixation d'une partie ou d'un composant sur une carroserie d'un véhicule et pièce d'adaption pour sa mise en oeuvre

(30) Priority: 07.12.1996 DE 19650960
(43) Date of publication of application: 10.06.1998
(73) Proprietor: ITW-ATECO GmbH, D-22844 Norderstedt (DE)
(72) Inventor: Sturies, Jens, 85101 Lenting (DE)
(74) Representative: Patentanwälte Hauck, Graalfs, Wehnert, Döring, Siemons, Schildberg

(56) References cited:
- DE-A- 3 818 493
- DE-U- 29 603 898
- FR-A- 2 503 804
- GB-A- 2 302 148
- US-A- 3 810 279
- US-A- 4 717 301

## Description

The present invention relates to a method for mounting parts such as a cable, tube, conduit, hose or the like on a support sheet, e.g. to a body of an automobile as defined in the preamble of patent claim 1. The present invention relates also to an adapter for such mounting according to patent claim 3.

Plastic fasteners are widely used in the automotive industry. They are used for example for the attachment of coverings, insulating mats, trimming and covering strips, but also to attach cables and cable bundles, hose packages for brake fluid and fuel conduits as well as for other tubings. The most common type of attachment of such plastics fasteners is presently an attachment thereof to upstanding bolts (weld bolts) which are welded to the body at the respective locations. This method has replaced another method which used an attachment in holes of sheet metal portions, for example by means of expansion rivets, expansion nuts or similar fastening means. It is known that holes have the drawback of permitting water vapour, water and contaminants to pass through so as to cause corrosion.

In US-A-3 810 279 a one-piece plastic drive fastener is disclosed having a head and a shank, the shank including a generally cruciform cross section presenting a plurality of generally flat, axially extending surfaces and a plurality of angular axially extending recesses between adjacent flat surfaces. With this shank the fastener can be fixedly retained in a hole of a support sheet. The head of the fastener includes a radially extending flange which is adapted to engage the associated surface of the sheet support. These features are common with the invention described below.

The weld bolts do not suffer from the above mentioned drawbacks and may be attached in a relatively simple manner. Also the mounting of plastics fasteners to upstanding bolts causes only very little assembly expenditure. However, upstanding bolts can be broken off or be damaged. The required repair expenditure during manufacture of the automobiles or eventually in the repair workshop is extremely high.

Furthermore, it as become known to close so-called varnish upflow holes by closure plugs of plastic material. The plugs are inserted into such holes by a snapping action and close the area at the interior side of the plug so as to prevent entry of humidity. Furthermore, it has become known to make hole plugs of hot-melt adhesives.

Finally, it has become known to make plastic fasteners of two parts, in particular for cable trees or the like. German patent application 34 45 935 discloses a cable fastening element including a shoe-shaped head portion which is connected to a shoe-receiving head portion of a fastener element which is adapted to be attached to the body of the automobile. In this manner the cable holder may be fixed to the cable or cable bundle by pre-assembly. When the cable or cable tree is being mounted to the automobile, it is being mounted to fastener elements by means of the preassembled holders.

It is a primary object of the invention to provide a method for mounting a part such as a cable, conduit, hose or the like to a support sheet, e.g. a portion of a body of an automobile, by which method the expenditure of assembly and manufacture is to be reduced and corrosion is to be avoided.

This primary object is achieved by the features of patent claim 1.

The method of the present invention returns to the prior method for attaching plastic fasteners in mounting apertures at the support sheet metal portion to which a part is to be mounted. As already known, the apertures are formed for example in the sheet metal blank for the blank body. However, it is important for the invention that an adapter is inserted into the mounting aperture of the blank body. The adapter portion is made of a plastic material which is substantially deformation-resistant at 180°C or higher. "Deformation-resistant" means that an adapter while not being stressed in any way retains its shape at the above mentioned temperature. A certain plasticity of the higher temperature is not detrimental because after the temperature has sunk below the critical temperature the material will have been sufficiently hardened so as to resist also mechanical stresses as they may occur when a holding portion or the part to be fastened is being assembled.

Furthermore, it is important that the adapter portion is mounted into the mounting aperture in a substantially gas-tight manner. This is achieved by mounting and sealing the adapter portion by a sealing ring.

It is furthermore important that the adapter is mechanically secured against withdrawal from the mounting aperture by means of an undercut. This is obtained by having the adapter engaged behind the rim of the mounting aperture when it is being inserted thereinto. This ensures the necessary axial fixing of the adapter.

The adapter includes an adapter head which is adapted to be connected to a head of a holding portion; the adapter head and the head of the holding portion may be connected to each other via a releasable or not releasable snap joint. Such snap joint, however, will be obtained only at a later date when the support sheet metal portion was processed, for example coated by a primer or a varnish. As is known, varnishing is performed at increased temperatures. The holding portion does not need to resist these temperatures; therefore it may be made of a less expensive plastics material.

From the above, it should be clear that the method of the invention results in a substantially reduced expenditure in the manufacture of automobile bodies and in a substantial reduction of replacement and repair services. Furthermore, energy consumption is being reduced. Idle times in the manufacturing factories will be reduced thereby. Furthermore, the expenditure for finishing operations will become less. Finally, the method of the invention allows to provide universal fasteners whereby the great number of different fastener elements presently used can be reduced.

The adapter for performing the method of the invention includes a foot enabling an undercut, and a seal. Furthermore, it includes a radial flange overlapping the mounting aperture, with the adapter head being positioned on the side of the flange opposite to the foot. A sealing ring of hot melt adhesive is provided on the lower surface of the flange portion to provide a gas-tight adhesive connection between the lower surface of the flange portion and the upper surface of the support sheet.

Various structural designs of the foot are possible. In one embodiment of the invention at least two parallel rows of snapping tongues parallel to the axis are provided to form a so-called eagle clip. As an alternative, the foot and the mounting aperture may form a bayonet joint. Furthermore, the foot may comprise an expansion nut. The expansion nut which may be snapped into the mounting hole includes an aperture for a mounting bolt or a screw; the holding portion may be attached to the expansion nut by means of the mounting bolt, or the bolt itself may include mounting means for a holding portion. As a further alternative, the foot may comprise an expansion rivet. Finally, under a further aspect of the invention the foot may have a first portion of polygonal cross section adjacent the flange, which first portion is followed by a second portion also of polygonal cross section. The foot while being in a first rotary position is inserted into the mounting hole and will be rotated thereafter such that said first portion engages the wall of the mounting hole. As a result of such rotation said second portion will form an undercut so that the foot cannot be withdrawn anymore from the mounting hole. Such mounting methods may be used in particular with non-circular mounting holes.

Instead of a hot-melt seal an elastomeric sealing ring positioned on the side of the flange facing the foot may be provided. For further sealing purposes the flange may include a continuous or annular rib which when the foot is being assembled engages the opposite side of the support sheet.

Attaching a holding portion to the adapter head may occur for example in an axial direction or transversely to the axis of the foot. Various designs are possible in this connection.

Embodiments of the invention will be explained in more detail with reference to drawings.
- Fig. 1: shows schematically a cross section of a first embodiment of an adapter portion of the invention.
- Fig. 2: shows a cross section of a second embodiment of an adapter portion.
- Fig. 3: shows an elevation of the adapter portion in Fig. 1 in a reduced scale.
- Fig. 4: shows a third embodiment of an adapter portion of the invention.
- Fig. 5: shows a view of the adapter portion in Fig. 4 from below.
- Fig. 6: shows a fourth embodiment of an adapter portion of the invention.
- Fig. 7: shows a fifth embodiment of an adapter portion of the invention.
- Fig. 8: shows a sixth embodiment of an adapter portion of the invention.

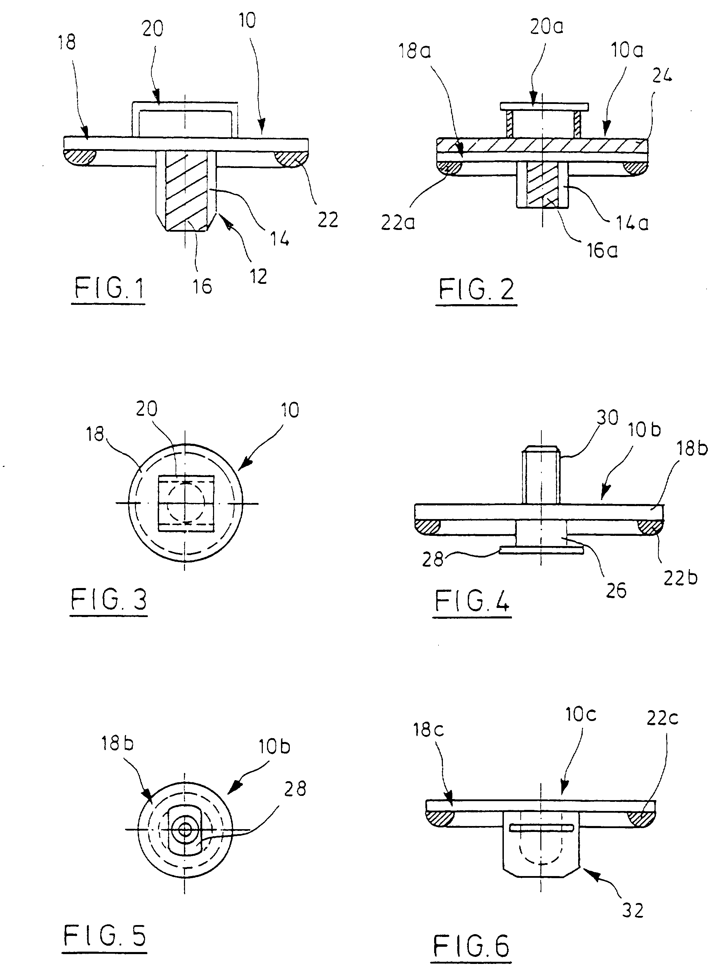

As shown in Fig. 1 an adapter portion 10 is integrally formed of plastics material. The material is of a type which is deformation-resistant at a temperature of 180° or even more. Such material is known per se. The adapter portion 10 includes a foot 12 of the so-called eagle clip type having guide ribs extending parallel to the axis and circumferentially spaced about elongated foot 12, and a row of flexible tongues extending parallel to the axis or diagonally and engaging behind the rim of a hole (not shown). The foot 12 is connected to the bottom side of a flange 18 which is e.g. of circular shape and which extends radially beyond the foot 12 for a substantial amount. The top side of the flange 18 includes means 20 for receiving a not-shown holding portion.

The receiving means 10 can be for example of the type which is disclosed in German patent application 34 45 935 and which receives a shoe connected to a retaining element for conduits. The bottom side of the flange 18 includes a ring 22 of hot-melt adhesive.

The foot 16 of the adapter portion 10 will be inserted into a pre-cut hole of for example a sheet metal portion of a blank body of an automobile and is retained therein by itself. During the varnishing process the hot-melt adhesive 22 will be heated so that it will adhere to the metal sheet resulting in a respective seal within the mounting hole. At a later date when the surface of the sheet metal portion will have been finished the not-shown holding portion may be mounted to the adapter portion.

The adapter portion 10a of Fig. 2 is of similar structure as that in Fig. 1 so that similar elements have been designated by the same reference numerals. It differs from the adapter portion in Fig. 1 in that the flange carries a dampening layer 24 of a material suited to absorb noise and vibrations so as to prevent vibrations from being transferred to the not-shown fastening member.

In the embodiment of Fig. 4 the adapter portion 10b has a foot formed as a shank 26 to which a disk 28 of increased diameter has been mounted. The disk 28 is of elongated shape as may be seen in Fig. 5. This allows to provide a bayonet joint with a non-circular hole. A threaded pin 30 is provided on the top side of the flange 18b. Its purpose is to mount a fastening or mounting portion.

In Fig. 6 the foot of the adapter portion 10c comprises an expansion nut 32 which opens in an upward direction above the flange 18c so that threading for example a metal bolt thereinto will secure the expansion nut 32 in the not-shown mounting hole. The metallic threaded pin may receive a holding portion at the same time.

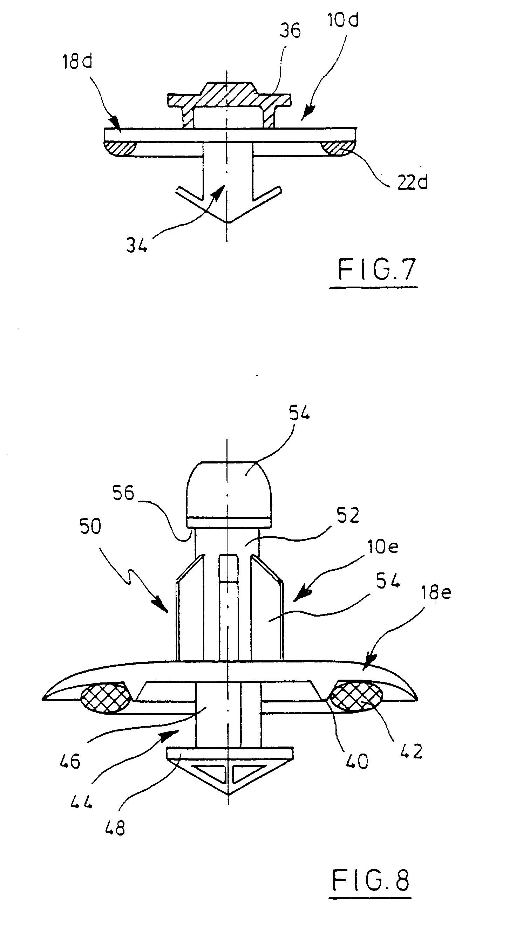

The adapter portion 10d in Fig. 7 includes a foot 34 comprised of an expansion rivet for being mounted into a mounting hole. The top side of the flange 18d carries a connector portion 36 for a holding portion which again may be mounted in the manner of a bayonet joint.

The adapter portion 10e in Fig. 8 includes a spherical annular flange 18e which is slightly flexible. At its bottom side it includes an annular rib 40 and a seal 42 of an elastomeric material such as polyurethane foam, a thermoplastic elastomer or the like. A foot 44 at the bottom side of the flange 18e includes a first portion 46 of a polygonal cross section which is followed by a second portion 48 also of polygonal cross section, with the cross sections of both portions 46, 48 being offset with respect to each other in a rotary direction. The foot 44 serves primarily to mount the adapter portion 10e to an uncircular, for example square hole. The first portion 48 which conforms to the contour of the hole is being inserted in the proper orientation, whereafter the adapter portion is rotated for example for 45° so that a clamping joint with the first portion 46 within the hole will be obtained or the edges will be slightly deformed so that the portion 46 fits into the hole. The second portion 48 now prevents withdrawal thereof.

An adapter head 50 includes a shank 52 with circumferentially spaced radial integral ribs 54 to assist the mounting and prevent rotation when a head of a holding portion (not shown) is being assembled thereon. The free end of the shank 52 carries a semispherical head 54 which together with the shank 52 forms a lower shoulder 56 to provide an undercut joint with a respective receiving means at the holding portion (not shown).

It should be understood that the adapter portion of the invention is suited both for assembly in a direction from the outside to the inside and for assembly in a direction from the inside to the outside.

## Claims

1. A method for mounting parts or components on a support sheet, e.g. of the body of an automobile, wherein the sheet having a first horizontally disposed upper surface and a second horizontally disposed lower surface is provided with a mounting aperture and is varnished, an adapter (10, 10a, 10b, 10d) having a flange portion (18, 18a, 18b, 18c, 18d) with an upper and a lower surface and a peripheral edge defined at a juncture between the upper and the lower surfaces and further having an axially extending foot portion (12, 32, 34) defining a vertical axis which is integrally connected to the lower surface of the flange portion (18, 18a, 18b, 18c, 18d) is mounted to the support sheet in that the foot portion (12, 32, 34) is inserted into the mounting aperture, with means on the foot portion engaging the second horizontally disposed lower surface of the support sheet to fixedly retain the adapter in a mounted state upon the support sheet, wherein further sealing means seal the flange portion (18, 18a, 18b, 18c, 18d) relative to the upper surface of the support sheet, and mounting the part or a component on a vertically upstanding axially extending head portion (20, 20a, 30, 36) coaxially disposed with respect to the foot portion and integrally connected the second upper surface of the flange portion (18, 18a, 18b, 18c, 18d), **characterized in that** the mounting of the adapter (10, 10a, 10b, 10c, 10d) is carried out before the varnishing of the support sheet takes place, the adapter (10, 10a, 10b, 10c, 10d) is made of a material which is resistive against temperatures of 180°C and higher without loosing its shape, and the further sealing means are a sealing ring (22, 22a, 22b, 22c, 22d) disposed on the lower surface or the flange portion (18, 18a, 18b, 18c, 18d) adjacent to the peripheral edge to effect a gastight sealing between the flange portion (18, 18a, 18b, 18c, 18d) and the support sheet during varnishing, and the mounting of a part or a component onto the head portion (20, 20a, 30, 36) takes place after the varnishing of the support sheet.

2. The method of claim 1, wherein the gastight sealing ring (22, 22a, 22b, 22c, 22d) interconnects the flange portion (18, 18a, 18b, 18c, 28d) and the support sheet.

3. An adapter for mounting parts or components on a support sheet e.g. of the body of an automobile with the support sheet having a first or horizontally disposed upper surface and a second horizontally disposed lower surface and a mounting aperture, the adapter (10, 10a, 10b, 10c, 10d) having a flange portion (18, 18a, 18b, 18c, 18d) with an upper and a lower surface and a peripheral edge defined at a juncture between the upper and the lower surface and further having an axially extending foot portion (12, 32, 34) defining a vertical axis which is integrally connected to the lower surface of the flange portion (18, 18a, 18b, 18c, 18d), the foot portion being provided with means for engaging the second horizontally disposed lower surface of a support sheet when inserted into the mounting aperture of the support sheet to fixedly retain the adapter in a mounted state upon the support sheet, the adapter further having a vertically upstanding axially extending head portion (20, 20a, 30, 36) coaxially disposed with respect to the foot portion and integrally connected to the second upper surface of a flange portion (18, 18a, 18b, 18c, 18d), **characterized in that** the upper and lower horizontally dispose surfaces of the flange portion (18, 18a, 18b, 18c, 18d) being designed to extend parallel to the upper surface of the support sheet, and a sealing ring (22, 22a, 22b, 22c, 22d) of hot melt adhesive being provided on the lower surface of the flange portion and adapted to provide a gastight adhesive connection between the lower surface of the flange portion (18, 18a, 18b, 18c, 18d) and the first upper surface of the support sheet.

4. The adapter of claim 3, wherein the foot portion (12) included at least two rows (16, 16a) of snapping tongues, with the rows extending parallel or diagonal to the axis of the adapter.

5. The adapter of claim 3, wherein the foot portion (26, 28) is formed such that is defines a bagonet type connecting with the mounting aperture.

6. The adapter of claim 3, wherein the foot portion (32) is defined by an expansion nut.

7. The adapter of claim 3, wherein the foot portion is defined by an expansion rivet.

8. The adapter of claim 3, wherein the foot portion includes a first portion adjacent to the flange portion and has a polygonal cross section and a second portion joining to the first portion also has a polygonal cross section such that the foot portion is insertable into the mounting aperture in a first rotational position with respect to its axis and the first portion still engages the mounting aperture upon rotation of the foot portion into a second rotational position with respect to its axis while the second portion prevents the foot portion from being withdrawn from the mounting aperture by an undercut.

9. The adapter of claim 3, wherein the head portion is designed to accommodate the part or component in that it is axially plugged onto the head portion.

10. The adapter of claim 3, wherein the head portion is defined as a receptacle for a shoe on the part or component and the receptacle forming a snapping connection with the shoe of the part or component if brought into interengagement transverse to the axis of the foot portion.

11. The adapter of claim 3, wherein a noise and/or vibration dampening layer (24) is attached to the upper surface of the flange portion (18a).

## Patentansprüche

1. Verfahren zur Anbringung von Teilen oder Komponenten an einem Tragblech, z.B. Karosserie eines Automobils, bei dem das Blech eine erste horizontal angeordnete obere Fläche und eine zweite horizontal angeordnete untere Fläche aufweist, mit einer Anbringungsöffnung versehen und lackiert ist, bei dem ein Adapter (10, 10a, 10b, 10d) einen Flanschabschnitt (18, 18a, 18b, 18c, 18d), eine obere und eine untere Fläche und eine Umfangskante aufweist, welche eine Verbindung zwischen oberer und unterer Fläche bildet, und dieser ferner einen sich axial erstreckenden Fußabschnitt (12, 32, 34) aufweist, der eine vertikale Achse definiert und einteilig übergeht in die untere Fläche des Flanschabschnitts (18, 18a, 18b, 18c), wobei der Adapter im Tragblech eingebaut ist, in dem der Fußabschnitt (12, 32, 34) in die Anbringungsöffnung eingesetzt wird, wobei Mittel des Fußabschnitts mit der zweiten horizontal sich erstreckenden unteren Fläche des Tragblechs zusammenwirken, um den Adapter im montierten Zustand fest am Tragblech zu halten, bei dem ferner Dichtungsmittel den Flanschabschnitt (18, 18a, 18b, 18c, 18d) gegenüber der oberen Fläche des Tragblechs abdichten und bei dem ein Teil oder eine Komponente auf einem vertikalen aufrechten sich axial erstreckenden Kopfabschnitt (20, 20a, 30, 36) angebracht wird, der koaxial zum Fußabschnitt angeordnet und einteilig mit der oberen Fläche des Flanschabschnitts (18, 18a, 18b, 18c, 18d) verbunden ist, **dadurch gekennzeichnet, daß** das Aufbringen des Adapters (10, 10a, 10b, 10c, 10d) vor dem Lackieren des Tragbleches durchgeführt wird, der Adapter (10, 10a, 10b, 10c, 10d) aus einem Material gefertigt ist, das gegenüber Temperaturen von 180 °C und höher resistent ist, ohne seine Form zu verlieren und die Dichtungsmittel von einem Dichtungsring (22, 22a, 22b, 22c, 22d) gebildet sind, der an der unteren Fläche oder dem Flanschabschnitt (18, 18a, 18b, 18c, 18d) neben der Umfangskante angeordnet ist, um eine gasdichte Abdichtung zwischen dem Flanschabschnitt (18, 18a, 18b, 18c, 18d) und dem Tragblech während des Lackierens zu bilden und das Anbringen des Teils oder der Komponente auf dem Kopfabschnitt (20a, 20a, 30, 36) nach dem Lackieren des Tragabschnitts erfolgt.

2. Verfahren nach Anspruch 1, **dadurch gekennzeichnet, daß** der gasdichte Dichtring (22, 22a, 22b, 22c, 22d) den Flanschabschnitt (18, 18a, 18b, 18c, 18d) und das Tragblech miteinander verbindet.

3. Adapter zur Anbringung von Teilen oder Komponenten an einem Tragblech, z.B. der Karosserie eines Automobils, wobei das Tragblech eine erste oder horizontal sich erstreckende obere Fläche und eine zweite sich horizontal erstreckende untere Fläche sowie eine Anbringungsöffnung aufweist, der Adapter (10, 10a, 10b, 10c, 10d) einen Flanschabschnitt (18, 18a, 18b, 18c, 18d) aufweist mit einer oberen und einer unteren Fläche und eine Umfangskante, die eine Verbindung zwischen der oberen und der unteren Fläche bildet und der Adapter ferner einen sich axial erstreckenden Fußabschnitt (12, 32, 34) aufweist, welcher eine vertikale Achse definiert und welcher einteilig mit der unteren Fläche des Flanschabschnitts (18, 18a, 18b, 18c, 18d) verbunden ist, wobei der Fußabschnitt mit Mitteln versehen ist, an die zweite horizontal sich erstreckende untere Fläche des Tragblechs angreift, wenn er in die Anbringungsöffnung des Tragblech eingesetzt ist, um den Adapter im montierten Zustand fest am Tragblech anzubringen, wobei der Adapter ferner einen vertikal sich aufrecht und axial erstreckenden Kopfabschnitt (20, 20a, 30, 36) koaxial zum Fußabschnitt aufweist, der einteilig mit der oberen zweiten Fläche des Flanschabschnitts (18, 18a, 18b, 18c, 18d) verbunden ist, **dadurch gekennzeichnet, daß** obere und untere horizontal sich erstreckende Flächen des Flanschabschnitts (18, 18a, 18b, 18c, 18d) sich parallel zur oberen Fläche des Tragblechs erstrecken und ein Dichtungsring (22, 22a, 22b, 22c, 22d) aus einem Heißschmelzkleber auf der unteren Fläche des Flanschabschnitts aufgebracht ist und eine gasdichte Klebverbindung zwischen der unteren Fläche des Flanschabschnitts (18, 18a, 18b, 18c, 18d) und der ersten oberen Fläche des Tragbleches bildet.

4. Adapter nach Anspruch 3, **dadurch gekennzeichnet, daß** der Fußabschnitt (12) mindestens zwei Reihen (16, 16a) von Federzungen aufweist, wobei die Reihen parallel oder diagonal zur Achse des Adapters verlaufen.

5. Adapter nach Anspruch 3, **dadurch gekennzeichnet, daß** der Fußabschnitt (26, 28) derart ist geformt ist, daß er eine Bajonettverbindung mit der Anbringungsöffnung bildet.

6. Adapter nach Anspruch 3, **dadurch gekennzeichnet, daß** der Fußabschnitt (32) als Spreizmutter ausgebildet ist.

7. Adapter nach Anspruch 3, **dadurch gekennzeichnet, daß** der Fußabschnitt als Spreizniet ausgebildet ist.

8. Adapter nach Anspruch 3, **dadurch gekennzeichnet, daß** der Fußabschnitt einen ersten Abschnitt neben dem Flanschabschnitt aufweist, der einen polygonalen Querschnitt aufweist sowie einen zweiten Abschnitt, der sich an den ersten Abschnitt anschließt und ebenfalls einen polygonalen Querschnitt aufweist derart, daß der Fußabschnitt in die Anbringungsöffnung in einer ersten Drehposition bezüglich seiner Achse in die Anbringungsöffnung einsetzbar ist, wobei der erste Abschnitt noch die Anbringungsöffnung bei Drehung des Fußabschnitts in eine zweite Drehposition bezüglich der Achse in Eingriff nimmt, während der zweite Abschnitt durch einen Hinterschnitt verhindert, daß der Fußabschnitt aus der Anbringungsöffnung herausgezogen wird.

9. Adapter nach Anspruch 3, **dadurch gekennzeichnet, daß** der Kopfabschnitt so ausgebildet ist, daß er ein Teil oder eine Komponente so aufnimmt, daß es/sie axial auf den Kopfabschnitt aufgesteckt wird.

10. Adapter nach Anspruch 3, **dadurch gekennzeichnet, daß** der Kopfabschnitt als Fassung für einen Schuh an dem Teil oder der Komponente ausgebildet ist und die Fassung eine Schnappverbindung mit dem Schuh des Teils oder der Komponente bildet, wenn die beiden quer zur Achse des Fußabschnitts (11) zusammengebracht werden.

11. Adapter nach Anspruch 3, **dadurch gekennzeichnet, daß** eine geräusch- und/oder vibrationsdämpfende Schicht (24) an der unteren Fläche des Flanschabschnitts (18a) angebracht ist.

## Revendications

1. Procédé pour monter des pièces ou composants sur une plaque de support, par exemple de carrosserie d'une automobile, dans lequel la plaque, ayant une première surface supérieure orientée horizontalement et une seconde surface inférieure orientée horizontalement, est munie d'une ouverture de montage et est vernie, un adaptateur (10, 10a, 10b, 10d), comprenant une partie collerette (18, 18a, 18b, 18c, 18d) avec des surfaces supérieure et inférieure et un bord périphérique défini à une jonction entre les surfaces supérieure et inférieure et comprenant en outre une partie pied s'étendant axialement (12, 32, 34) définissant un axe vertical qui est reliée d'un seul tenant à la surface inférieure de la partie collerette (18, 18a, 18b, 18c, 18d), est monté à la plaque de support par insertion de la partie pied (12, 32, 34) dans l'ouverture de montage, avec des moyens sur la partie pied mettant en prise la seconde surface inférieure orientée horizontalement de la plaque de support pour retenir fixement l'adaptateur dans un état monté sur la plaque de support, dans lequel des moyens d'obturation supplémentaires scellent la partie collerette (18, 18a, 18b, 18c, 18d) à la surface supérieure de la plaque de support, le procédé consistant à monter la pièce ou le composant sur une partie tête (20, 20a, 30, 36) s'étendant axialement et dressée verticalement, orientée coaxialement par rapport à la partie pied et reliée d'un seul tenant à la seconde surface supérieure de la partie collerette (18, 18a, 18b, 18c, 18d), **caractérisé en ce que** le montage de l'adaptateur (10, 10a, 10b, 10c, 10d) est réalisé avant d'exécuter le vemissage de la plaque de support, l'adaptateur (10, 10a, 10b, 10c, 10d) est fait d'une matière qui résiste à des températures de 180°C et plus sans perdre sa forme, les moyens d'obturation supplémentaires sont une bague d'étanchéité (22, 22a, 22b, 22c, 22d) placée sur la surface inférieure de la partie collerette (18, 18a, 18b, 18c, 18d) adjacente au bord périphérique pour former un joint étanche au gaz entre la partie collerette (18, 18a, 18b, 18c, 18d) et la plaque de support durant le vemissage, et le montage d'une pièce ou d'un composant sur la partie tête (20, 20a, 30, 36) est réalisé après le vernissage de la plaque de support.

2. Procédé selon la revendication 1, dans lequel la bague d'étanchéité au gaz (22, 22a, 22b, 22c, 22d) relie l'une à l'autre la partie collerette (18, 18a, 18b, 18c, 18d) et la plaque de support.

3. Adaptateur pour le montage de pièces ou composants sur une plaque de support, par exemple de carrosserie d'une automobile, la plaque de support ayant une première surface supérieure orientée horizontalement et une seconde surface inférieure orientée horizontalement et une ouverture de montage, l'adaptateur (10, 10a, 10b, 10c, 10d) comprenant une partie collerette (18, 18a, 18b, 18c, 18d) avec des surfaces supérieure et inférieure et comprenant en outre une partie pied s'étendant axialement (12, 32, 34) définissant un axe vertical qui est reliée d'un seul tenant à la surface inférieure de la partie collerette (18, 18a, 18b, 18c, 18d), la partie pied étant munie de moyens pour mettre en prise la seconde surface inférieure orientée horizontalement de la plaque de support quand elle est insérée dans l'ouverture de montage de la plaque de support pour retenir fixement l'adaptateur dans un état monté sur la plaque de support, l'adaptateur comprenant en outre une partie tête (20, 20a, 30, 36) s'étendant axialement et dressée verticalement, orientée coaxialement par rapport à la partie pied et reliée d'un seul tenant à la seconde surface supérieure de la partie collerette (18, 18a, 18b, 18c, 18d), **caractérisé en ce que** les surfaces supérieure et inférieure orientées horizontalement de la partie collerette (18, 18a, 18b, 18c, 18d) sont conçues pour s'étendre parallèles à la surface supérieure de la plaque de support, et une bague d'étanchéité (22, 22a, 22b, 22c, 22d) d'adhésif thermofusible est prévue sur la surface inférieure de la partie collerette et adaptée pour former un joint collé étanche au gaz entre la surface inférieure de la partie collerette (18, 18a, 18b, 18c, 18d) et la première surface supérieure de la plaque de support.

4. Adaptateur selon la revendication 3, dans lequel la partie pied (12) comprend au moins deux rangées (16, 16a) de languettes à claquement, les rangées s'étendant parallèlement ou en diagonale par rapport à l'axe de l'adaptateur.

5. Adaptateur selon la revendication 3, dans lequel la partie pied (26, 28) est formé de manière telle qu'elle définit un assemblage de type à baïonette avec l'ouverture de montage.

6. Adaptateur selon la revendication 3, dans lequel la partie pied (32) est définie par un écrou expansible.

7. Adaptateur selon la revendication 3, dans lequel la partie pied est définie par un rivet expansible.

8. Adaptateur selon la revendication 3, dans lequel la partie pied comprend une première partie qui est adjacente à la partie collerette et présente une section transversale polygonale et une deuxième partie qui est réunie à la première partie et présente aussi une section transversale polygonale, de sorte que la partie pied est susceptible d'ètre insérée dans l'ouverture de montage dans une première position de rotation autour de son axe et la première partie pénètre encore dans l'ouverture de montage après rotation de la partie pied jusqu'à une seconde position de rotation autour de son axe tandis que la deuxième partie empêche la partie pied d'être retirée de l'ouverture de montage par une gorge.

9. Adaptateur selon la revendication 3, dans lequel la partie tête est conçue pour recevoir la pièce ou composant par enfoncement axial de la pièce ou composant sur la partie tête.

10. Adaptateur selon la revendication 3, dans lequel la partie tête est définie comme un réceptacle pour un sabot sur la pièce ou composant, le réceptacle formant un assemblage à claquement avec le sabot de la pièce ou composant quand il est amené en prise mutuelle transversalement à l'axe de la partie pied.

11. Adaptateur selon la revendication 3, dans lequel une couche d'amortissement de bruit et/ou de vibrations (24) est attachée à la surface supérieure de la partie collerette (18a).
